# EUROPEAN PATENT APPLICATION

(11) **EP 3 964 275 A1**
(43) Date of publication of application: **09.03.2022**
(21) Application number: 20194081.4
(22) Date of filing: 02.09.2020
(51) Int. Cl.: B01D 39/16, B01D 39/04, A41D 13/11, A62B 23/02

(54) **COMPOSITE FILTER MATERIAL WITH ADHESIVE LAYER FOR REVERSIBLE ATTACHMENT TO TEXTILE FACE MASKS**

(71) Applicant: Impact Products GmbH, 10967 Berlin (DE)
(72) Inventor: Wilmking, Jan, 10967 Berlin (DE)
(74) Representative: Hertin und Partner Rechts- und Patentanwälte PartG mbB

(57) **Abstract**

The invention relates to a composite filter material configured to filter air-borne particles or aerosols, and for reversable attachment to a face mask. In one aspect, the filter material permeable to air and configured for use with a face mask for a human subject, wherein said filter material comprises a skin-compatible inner surface, is configured for filtering and/or capturing aerosols, and wherein said filter material comprises an adhesive immobilized to an outer surface, wherein the adhesive is configured for reversable attachment to a further textile. In one aspect, the invention relates to a composite filter material comprising a first layer suitable for contact with the skin, a second layer with a fine-pore material and a third layer with a large-pore material for filtering air-borne particles, and a fourth layer comprising an adhesive for reversable attachment to a further textile, such as a face mask. In another aspect, the invention relates to a kit comprising a face mask for covering the mouth and nose of a human subject and the composite filter material of the invention. In another aspect, the invention relates to a method for supplementing the filter properties of a textile face mask using the composite filter material of the invention.

## Description

The present invention is in the field of textile filter materials and air-permeable face masks.

The invention relates to a composite filter material configured to filter air-borne particles or aerosols, and for reversable attachment to a face mask.

In one aspect, the filter material is permeable to air and configured for use with a face mask for a human subject, wherein said filter material comprises a skin-compatible inner surface, is configured for filtering and/or capturing aerosols, and wherein said filter material comprises an adhesive immobilized to an outer surface, wherein the adhesive is configured for reversable attachment to a further textile. In one aspect, the invention relates to a composite filter material comprising a first layer suitable for contact with the skin, a second layer with a fine-pore material and a third layer with a large-pore material for filtering air-borne particles, and a fourth layer comprising an adhesive for reversable attachment to a further textile, such as a face mask.

In another aspect, the invention relates to a kit comprising a face mask for covering the mouth and nose of a human subject and the composite filter material of the invention. In another aspect, the invention relates to a method for supplementing the filter properties of a textile face mask using the composite filter material of the invention.

### BACKGROUND OF THE INVENTION

Face masks, also known as community masks, in addition to other auxiliary means such as cloths or scarves, are often used to filter the air we breathe by removing air-borne particles. Masks are becoming increasingly important, both for self-protection and for the protection of others, especially in the context of infectious disease.

By way of example, recent studies provide evidence for a reduction in cases of COVID-19 that correlates with mandates requiring the wearing of face masks in public, such that mask wearing appears to reduce the spread of infectious disease spread by air-borne particles or aerosols (Lyu and Wehby, Health Affairs, 39, 8 (2020): 1419-1425).

Typically, community masks are not designed with medical grade filtration materials. The filter properties of the above-mentioned masks or auxiliary filter products are therefore often insufficient to protect the wearer effectively from fine particles such as cigarette smoke, fine dust, or from infectious air-borne particles such as bacteria or viruses.

The present invention seeks to address these deficiencies by providing a composite filter material, suitable for improving the filtering properties of a mask, the material comprising an adhesive for reversable attachment to a further textile, such as a face mask.

The technology for filtering particulates from gases has developed in both commonplace applications, such as vacuum cleaning of dirt and dust, as well as in demanding industrial applications, such as the removal of contaminants of specific particle sizes from gases. Filtration technology has evolved to provide filter media that are adapted to optimally filter specific size fractions of contaminating particulates.

For example, US7094270 discloses a composite filter for filtering ambient air, comprising multiple layers, such as upstream and downstream tiers, suitable for use in vacuum cleaner bags, heating ventilation and air conditioning systems.

For filtering of biological particles, filter materials are disclosed in the art, such as in US20160243477, which discloses an allergen trap comprising a woven or nonwoven multistrata substrate, with a hydrophobic stratum comprising synthetic fibers, an intermediate stratum comprising cellulose fibers, synthetic fibers and tacky adhesive, and a bottom stratum comprising cellulose fibers and synthetic fibers, wherein the intermediate stratum is impregnated with a tacky adhesive.

Filtration materials for face masks are also disclosed in the art, for example in WO2007054040A2, which discloses a nanofiber filter for removing biological impurities, comprising an active nanofibrous layer formed of polymeric nanofibers containing particles of at least one low molecular substance active against the removed biological impurity.

Face masks are known in the art, such as the multi-layer N95 masks that contain an electrocharged layer capable of attracting and trapping aerosol droplets down to micrometer dimensions, virions, and bacteria in nanometer dimensions.

Despite these recent developments with respect to filtering technologies, further improvements are required in providing simple, cost-efficient solutions for replaceable community face mask filters that are effective in reducing the risk of potentially hazardous air-borne particles being inhaled by a user and/or reducing the risk of the user spreading potentially hazardous exhaled air-borne particles, such as viral particles.

### SUMMARY OF THE INVENTION

In light of the prior art the technical problem underlying the invention is the provision of improved or alternative means for improving and/or supplementing the filter properties of textile face masks or other textile filters.

Another objective of the invention is to develop improved or alternative means for providing replaceable filter materials suitable for community masks.

This problem is solved by the features of the independent claims. Preferred embodiments of the present invention are provided by the dependent claims.

The invention therefore relates to a composite filter material permeable to air and configured for use with a face mask for a human subject, wherein said filter material:
- comprises a skin-compatible inner surface
- is configured for filtering and/or capturing aerosols,
- and wherein said filter material comprises an adhesive immobilized to an outer surface, wherein the adhesive is configured for reversable attachment to a further textile.

In one embodiment, the composite filter material comprises a first layer suitable for contact with the skin, a second layer with a fine-pore material and a third layer with a large-pore material for filtering air-borne particles, and a fourth layer comprising an adhesive for reversable attachment to a further textile, such as a face mask.

In one embodiment, the invention relates to composite materials comprising fiber and/or membrane-based filter materials with an adhesive layer. The composite material can be used as a temporary filter medium in mouth-nose masks and similar auxiliary products and increases their filter performance and thus the level of protection for the user against inhaling microparticles like dust, microbes, bacteria, viruses and other harmful airborne particles, and/or reduces the risk of spreading potentially hazardous exhaled air-borne particles, such as viral particles via exhalation by the user.

In one embodiment, the adhesive layer is located on the distal side of the filtering composite material, facing away from the user, and temporarily and reversibly bonds it to a carrier material (e.g. mouth-nose protection).

In one embodiment, the composite filter material of the invention comprises:
a) a first layer comprising or consisting of a skin-compatible textile,
b) a second layer, positioned distally said first layer, said second layer comprising or consisting of a fine-pore material configured for filtering and/or capturing aerosols, preferably for filtering and/or capturing air-borne bacterial and/or viral particles,
c) a third layer, positioned distally to said first layer, said third layer comprising or consisting of a large-pore material configured for filtering and/or capturing air-borne dust particles, and
d) a fourth layer, positioned distally to said second and third layers, said fourth layer comprising or consisting of an adhesive immobilized to the adjacent layer, wherein the adhesive is configured for reversable attachment to a further textile.

In one embodiment of the composite filter material, the second layer is positioned distally and adjacent to said first layer, and the third layer is positioned distally and adjacent to said second layer, and the fourth layer is positioned distally and adjacent to said third layer.

In a preferred embodiment of the composite filter material, the fine-pored material exhibits pores with an average pore size of 0.05-500 µm.

In a preferred embodiment of the composite filter material the large-pore material exhibits pores with an average pore size of 100-1000 µm.

In one embodiment of the composite filter material, the filter material is configured for filtering and/or capturing at least 85%, preferably at least 95%, more preferably at least 98%, of air-borne particles as tested in standard paraffin-oil or NaCI filter tests of 0.2-0.35 µm in diameter.

As described in greater detail below, the filter properties of the composite material of the invention may be configured for various purposes, depending on the particular intended use. For example, certain materials may be used in order to filter properties may be elected and employed to remove aerosols from the air or filter viral particles from the air.

In one embodiment, the invention therefore relates to a composite filter material, comprising:
a. a first layer comprising or consisting of a skin-compatible textile,
b. a second layer, positioned distally and adjacent to said first layer, said second layer comprising or consisting of a fine-pore material configured for filtering and/or capturing air-borne particles, wherein said fine-pored material exhibits pores with an average pore size of 1-1000 nm, preferably 0.05-500 µm,
c. a third layer, positioned distally and adjacent to said second layer, said third layer comprising or consisting of a large-pore material configured for filtering and/or capturing air-borne particles, wherein said large-pore material exhibits pores with an average pore size of 1-1000 µm, preferably 100-1000 µm, and
d. a fourth layer, positioned distally and adjacent to said third layer, said fourth layer comprising or consisting of an adhesive immobilized to the third layer, wherein the adhesive is configured for reversable attachment to a further textile.

To the knowledge of the inventor, no such filters have been described previously, which are specifically configured not as masks themselves but as supplemental filters for existing masks. The present invention is based on the surprising finding that a layered composite material as described herein not only provides sufficient filtering properties for removing small particles, such as viral particles, from the air, but also is sufficiently light-weight and comfortable to be appended to existing textile masks. It was previously not considered readily achievable that an effective filter insert could be provided with an adhesive that allowed good filter properties and a light weight, combined with secure but reversable positioning of the filter to an existing mask, enabling an improvement in filter properties of a mask without added discomfort to the user.

In preferred embodiments, the filter material is designed or configured:
- so that it can be attached several times without leaving a residue of the adhesive for easy positioning and repositioning,
- for reuse,
- for residue-free disposal,
- so that it can be freely cut to size, using for example a standard pair of scissors, and thus adapted to the shape of the auxiliary textile filter product,
- with a uniform adhesive pattern, and/or
- for environmentally friendly disposal.

As used herein, the "further textile" refers to any other textile, in addition and separate to (preferably not bound to) the four layers described herein, that may be employed in combination with the inventive filter material. In preferred embodiments the further textile is a face mask, or auxiliary textile, for example for use in a similar fashion to a face mask, such as cloths, scarves, sweaters, head bands, neck bands, or other textiles.

In some embodiments, an open, porous and thin scrim is used as the third layer to protect the underlying second filter layer from abrasion or damage by large and/or hard particles. In some embodiments, a porous and/or bulky layer is used as the third layer to capture substantial amounts of large particles, such as dust or dirt, and a fine, low porosity layer is used as the second layer for removing small particles and to increase filtration efficiency.

In some embodiments, these separate filter layers are selected and combined in a preselected sequence and assembled as a group to form a multilayer, and therefore multifunctional composite filter. The one or more adjacent layers can be bonded to each other or the layers can be unbonded.

According to the present invention, the terms inner surface and outer surface are used with relation to the user's face. An inner surface is intended for positioning closest to a user's face, while an outer surface is positioned or oriented away from the users, face, for example at a position suitable for attachment to a further (auxiliary) textile, i.e. a face mask to which the filter material should be attached.

According to the present invention, the terms distal and proximal are employed to determine an order of layer position, wherein distal is considered distant or positioned away from the user's face, and proximal is considered in proximity or close to the user's face. Therefore, the layers of the filter material are preferably defined by the first (non-irritating) layer being proximal to the user, i.e. next to the skin, and the fine- and large pored-filter layers being distal from the first layer, and the adhesive being positioned distally to the second and third filter layers, i.e. to the exterior of the filter for attachment to the inside of an existing face mask or other auxiliary textile. In some embodiments, the second and third layers may be reversed in order with respect to distal and proximal positioning.

In one embodiment, the adhesive bond between the adhesive and the composite material is designed in such a way that a bond between the composite material and the carrier material can be repeated several times. In preferred embodiments, the adhesive remains immobilized to the multilayer filter medium and not to the auxiliary carrier material (face mask or other auxiliary material, also termed a further textile). This beneficial property enables repositioning the filter on a carrier (mask) and/or to use it on different carriers.

In further embodiments, the composite material is made up of several fiber-based layers (textile) and membranes, and an adhesive layer. In embodiments of the invention, these layers comprise one or more of the following advantageous properties or features: (1) Pleasant non-irritating contact on the skin, (2) selectable filtering performance of the material for particles of particular size ranges, such as a fine-pore material, (3) protection of a filter layer against physical damage, so the filter comprises multiple layers that filter out larger particles and smaller particles, respectively, and (4) the filter comprises an immobilized adhesive for reversible attachment to a textile.

In one embodiment, the layers of the filter material are bonded, so that all layers remain bound together even if they are repeatedly attached and repositioned on a carrier (e.g. a community mask). For this purpose, in some embodiments, the textile composite is pre-treated mechanically and/or thermally. The layer to be attached to the face mask, i.e. distal to the user/facing away from the user, is preferably prepared for the immobilized adhesive by surface pretreatment (e.g. corona, plasma or ion pretreatment). The purpose of the pre-treatment is to ensure that the adhesive is immobilized to the composite even if it is attached and removed several times and does not remain on the carrier.

The composite filter material as described herein therefore enables a surprisingly effective but simple-to-use, repositionable and replaceable filter material for use in pre-existing face masks or other auxiliary filter textiles. The invention is associated with ease of use, simple manufacture and low-cost, enabling users to enhance the filtering properties of an existing mask.

As an additional advantage, the invention avoids unnecessary waste of additional components of face masks, such as wire elements for forming a face mask to the user's face, or the straps or elastic commonly employed to hold the mask to a user's face or ears, or visual or aesthetic elements of a mask that the user may wish to maintain. The filter material itself can simply be positioned and removed when needed, also reducing the need to wash masks and enhancing hygiene in the regular use of face masks.

In one embodiment, the composite filter material of the invention is permeable to air (gas-permeable) and configured for use with a face mask through which a human subject can respire.

The filter material can therefore be positioned either loosely or tightly to a user's face, depending on the mask or auxiliary textile, allowing air to pass through the material to effectively filter unwanted particles. In one embodiment, the filter material is gas-permeable with properties that enable no additional difficulty in a user's breathing when wearing a mask comprising the filter material of the invention. It is an additional benefit and surprising result that no increased difficulty in breathing is observed considering the fine pore structure of the employed filters in combination with a strong but reversable adhesive.

In one embodiment, the further textile is the inner surface of a face mask configured for covering the mouth and nose of a human subject, and wherein the immobilization of the adhesive to the third layer is configured for reversable attachment of the adhesive to said further textile essentially without dissociation of the adhesive from the third layer upon repeated attachment and detachment to said further textile.

As an additional advantage, the adhesive is configured in order to prevent dissociation between the third layer and the adhesive (fourth layer), even after multiple uses (positioning and removal of the filter from a further textile). The user therefore avoids any residue or damage to the further textile. The immobilization between the third and fourth (adhesive) layers is therefore irreversible, and the reversible binding between the fourth (adhesive) layer and further textile is strong but reversable and capable of repeated use.

In one embodiment, the fourth layer comprises a water-soluble and/or biocompatible adhesive, preferably an acrylate-copolymer or synthetic rubber adhesive.

Suitable adhesives relate to, without limitation, pressure-sensitive adhesives, biocompatible adhesives, adhesives applied in biocompatible medical tape products, such as those described in more detail below. Suitable adhesives may be elected by a skilled person using common knowledge and are by way of example employed in products from Lohmann (e.g. as used in Duplomed), Pronat or 3M (as used in 3M medical adhesive tapes).

A pressure-sensitive adhesive (PSA, self-adhesive, self-stick adhesive) is a type of nonreactive adhesive which forms a bond when pressure is applied to bond the adhesive with a surface. No solvent, water, or heat is needed to activate the adhesive. PSA are typically used in tapes, labels, glue dots, note pads, and a wide variety of other products. In some embodiments, the adhesive employed, preferably a PSA, exhibits viscoelastic (viscous and elastic) properties.

As used herein, removable or reversible adhesives are designed to form a temporary bond, and ideally can be removed after seconds, minutes, hours, days, weeks, months or years without leaving residue on the adherend. Removable adhesives are used in applications such as surface protection films, masking tapes, bookmark and note papers, and for skin contact (wound care dressings, EKG electrodes, athletic tape, analgesic and transdermal drug patches, etc.). According to the present invention the removable adhesives are designed to repeatedly stick and unstick. They have low adhesion and generally cannot support much weight.

In some embodiments, the adhesive is selected to provide ample adhesion to a further textile but is applied sparingly, adjusted to an amount sufficient to bear the (low) weight of the textile filter composite.

In some embodiments, the adhesive, preferably a PSA, is based on an elastomer compounded with a suitable tackifier (e.g., a rosin ester). The elastomers can be based on acrylics, which can have sufficient tack on their own and do not require a tackifier, bio-based acrylate, butyl rubber, ethylene-vinyl acetate (EVA) with high vinyl acetate content, natural rubber, nitriles, or silicone rubbers. In some embodiments, the adhesive is permeable to gas and water vapor, enabling a breathable filter in embodiments where a significant portion of the filter material is covered with adhesive.

In some embodiments, styrene block copolymers (SBC) or rubber-based adhesives are employed, and have good low-temperature flexibility, high elongation, and high heat resistance. In some embodiments, PSA may be employed based on styrene-ethylene/butylene-styrene (SEBS), often used in low self-adhering non-woven applications, styrene-ethylene/propylene (SEP), styrene-isoprene-styrene (SIS), often used in low-viscosity high-tack PSA applications, or vinyl ethers.

Although the adhesive is not designed to contact the skin of the wearer, the adhesive is in preferred embodiments, biocompatible, as breathing through the adhesive is in some embodiments intended. Biocompatible, or medical grade adhesives, are known to a skilled person. Suppliers of medical-grade PSAs generally manufacture their products in line with ISO 9000 quality management standard requirements. Adhesives classed as medical grade have typically undergone biocompatibility testing, e.g. as covered in the ISO 10993 standard, cytotoxicity and MEM standards as in ISO 10993-5, or skin irritation and sensitization as in ISO 10993-10.

Pronat offers a range of single- and double-sided medical adhesive tapes, which employ adhesives also suitable for the present invention, selected preferably from biocompatible acrylic, rubber and/or silicone adhesives. The adhesives are preferably breathable, and suitable for use in the present invention. Lohmann (e.g. as used in Duplomed) also offers suitable adhesives, such as DuploMED 8171 (biocompatible acrylate polymer), or DuploMED SD 6254 D (synthetic rubber).

Acrylate adhesives can be designed with high or low tack, and high or low peel strength. The tack properties of the formulation can be influenced by the addition of tackifiers. Acrylate PSAs are permeable to water vapour. Most acrylate adhesives release cleanly off substrate surfaces without leaving adhesive residue. The fact that tack and adhesion can be finely tuned, and that the adhesives are breathable, makes acrylate adhesives suitable for the present invention.

Silicone PSAs also perform well. The silicone adhesive formulation can be adjusted to high or low tack, and high or low peel adhesion. A combination of soft silicone gel adhesive and acrylate adhesive is especially useful.

Hydrocolloid adhesives are also a preferred adhesive and are breathable but resistant to vapor and body fluids. They represent a type of pressure-sensitive adhesive with both fast adhering characteristics, as well as fluid absorbency. Hydrocolloid adhesives can be applied to many substrate materials, including textiles, natural or synthetic fibers, waves, knits or non-wovens, polyethylene foam, PVC foam, and polyurethane foam or film. These adhesives are moisture vapor permeable while also capable of providing a seal against liquid leakage.

In preferred embodiments, the adhesive is or is characterized by:
- Gentle, residue-free removal from textiles, skin and/or hair,
- Permits optimal positioning or re-positioning of the filter after contact to a textile or skin,
- Excellent initial tack and final bonding strength, with reversible binding,
- Biocompatible, non-cytotoxic, non-irritating, and
- Gamma-sterilization stable.

In one embodiment, the fourth adhesive layer is positioned over essentially the entire surface of the layer underneath. In one embodiment, the fourth layer is positioned in one or more isolated patches and/or strips on the layer underneath. In one embodiment, the fourth layer is positioned in a regular pattern, distributed across the entire surface of the layer underneath, but not completely covering said layer underneath.

In one embodiment, the fourth layer is positioned in proximity to the edge of the filter material, either in strips, patches, or other isolated regions of the filter, on the layer underneath.

In one embodiment, the adhesive fourth layer covers about 1%, 2, 5, 10, 15, 20, 25, 30, 35, 40, 45, 50, 55, 60, 65, 70, 75, 80, 85, 90, 95, or 100% of the surface area of the layer underneath. Most preferred are embodiments in which 1-50%, preferably 2-20%, or 2-8%, of the surface area of the filter layer underneath is covered by adhesive, preferably in the regions in proximity to the edge of the textile.

In one embodiment, the immobilization of the adhesive fourth layer to the adjacent third layer is enhanced by corona, plasma and/or ion treatment of the third layer prior to application of the adhesive fourth layer.

The Corona effect is a phenomenon achieved in a plasma created with a discharge generated between two asymmetrical electrodes, one of which is peak-shaped. The electrical field is higher on the peak side, where plasma will be generated with crackling arcs, this is the Corona effect. Corona treatment is an established technology used to process materials or surfaces, most typically to treat foils or fabrics on rollers, for example plastic foils on rollers with large widths (several meters) being rolled or unrolled at a fast pace (several hundreds of meters / minute). Corona treatment is typically used for systems which ionize air without any additional gases being employed. Corona treatment is an established technology and is an excellent and extremely efficient way to increase surface energy and adhesion for printing, coating and laminating materials or films.

Plasma treatment is a related technology in which an electrical discharge is created in an atmospheric pressure gas with a low electrical current. The product thereof is sprayed onto the surface to be treated. Mainly used are gases including air, nitrogen, helium, argon, or a blend of the above. Examples of plasma treatment are Blown Arc Technology and Blown Ion Technology. Blown Arc Systems are most like corona treatments systems. Blown Arc Air Plasma is formed by blowing atmospheric air past two high voltage power electrodes. The electrical discharge positively charges the ion particles surrounding it. Through direct contact, these particles positively charge the treated area of the object's surface. This makes the surface more receptive to any applied substance, such as an adhesive.

Corona or Plasma surface treatment is a clean and eco-friendly technology because it uses only air, and potentially nitrogen or other gases. Plasma or corona treatment is often as efficient as chemical products when preparing a high-performance, long lasting laminating or bonding operation.

In one embodiment, the material is configured for reversable attachment to a face mask covering the mouth and nose of a human subject, wherein said material is effective to reduce passage of cigarette smoke, air-borne bacteria and viruses, in particular SARS-CoV-2 viral particles, through said material upon respiration of a human subject wearing said mask.

A skilled person is therefore capable of selecting filter properties and appropriate materials in order to design the filter to entrap or filter desired particle sizes. Of particular interest is the filtering of viral particles from aerosols or other forms or air-borne viral particles.

By way of example, "Coronavirus Disease 2019" (COVID-19) is caused by the pathogenic corona virus SARS-CoV-2. Beginning in December 2019, the virus spread globally within a few weeks and led to an international health emergency. The worldwide pandemic poses huge challenges to health systems and leads additionally to restrictions in social life and weakening of global market economies. Since no effective therapy is available to date, and the disease is associated with high morbidity and mortality, there is a great need for preventative interventions, such as mask wearing in the community.

SARS-CoV-2 virions are typically considered in the size range of approximately 50-200 nm in diameter, with some studies having determined SARS-CoV-2 viral particles as approximately 100 nm in diameter (Bar-On et al; eLife. 2020; 9: e57309).

Masks for filtering viral particles have been previously described, although typically are costly and complicated to manufacture, being suitable primarily for medical personnel and not community use. For example, N95 masks are designed to remove more than 95% of all particles that are at least 0.3 µm in diameter. An N95 mask or N95 respirator is a particulate-filtering facepiece respirator that meets the U.S. National Institute for Occupational Safety and Health (NIOSH) N95 classification of air filtration, meaning that it filters at least 95% of airborne particles. In fact, measurements of the particle filtration efficiency of N95 masks show that they are capable of filtering ≈ 99.8% of particles with a diameter of ≈ 0.1 µm. SARS-CoV-2 is an enveloped virus ≈ 0.1 µm in diameter, so N95 masks are capable of filtering most free virions.

Furthermore, viruses are often transmitted through respiratory droplets produced by coughing and sneezing. Respiratory droplets are usually divided into two size sets, including large droplets (>5 µm in diameter) that fall rapidly to the ground and are thus transmitted only over short distances, and small droplets (≤5 µm in diameter). Studies of cough aerosols and of exhaled breath from patients with various respiratory infections have shown striking similarities in aerosol size distributions, with a predominance of pathogens in small droplets (<5 µm). Small droplets can also evaporate into 'droplet nuclei', remain suspended in air for significant periods of time and could be inhaled. Some viruses, such as measles, can be transmitted by droplet nuclei. Both small droplets and droplet nuclei are immediately respirable, suggesting the need for personal respiratory protection for individuals in close proximity to patients with potentially virulent pathogens. Surgical masks worn by patients therefore reduce exposures to infectious aerosols to health-care workers and other individuals (Fennelly, Lancet Respir Med 2020, S2213-2600(20)30323-4).

The characteristic diameter of large droplets produced by sneezing is ∼ 100 µm, while the diameter of droplet nuclei produced by coughing is on the order of ∼ 1 µm. At present, it is unclear whether surfaces or air are the dominant mode of SARS-CoV-2 transmission, but N95 masks provide some protection against both. Similar pore sizes may be employed as are used in N95 masks in the present invention.

As used herein, the terms "respiratory droplets" or "aerosols" or "droplets" are used exchangeable to indicate air-borne particles comprising a liquid, preferably capable of carrying one or more bacterial and/or viral particles, such as those exhaled by a user, for example - but without limitation to - by sneezing, coughing and/or breathing.

In one embodiment, the composite filter material of the invention is configured for filtering and/or capturing an aerosol. In one embodiment, the second layer of the composite filter material of the invention is configured for filtering and/or capturing an aerosol. In one embodiment, the third layer of the composite filter material of the invention is configured for filtering and/or capturing an aerosol.

In one embodiment, the aerosols have a diameter of 0.01-1000 µm, preferably a diameter of 0.1-500 µm, more preferably a diameter of 0.5-200 µm. In some embodiments, small aerosols may have a diameter of 0.01-10 µm, preferably 0.1-5µm. In some embodiments, large aerosols may have a diameter of 1-1000 µm, preferably 1-500 µm, more preferably 5-300 µm.

In one embodiment, the characteristic of filtering and/or capturing an aerosol is defined by a particulate air filter score. For example, the high-efficiency particulate air (HEPA), also known as high-efficiency particulate absorbing, or high-efficiency particulate arrestance standards, may be employed. The HEPA is an efficiency standard of air filter established in the art.

In some embodiments, the filter of the invention meets the HEPA standard. As is established in the art, the HEPA standard requires certain levels of efficiency. Common standards require that a HEPA air filter must remove - from the air that passes through - at least 99.95% (European Standard) or 99.97% (US standard) of particles whose diameter is equal to 0.3 µm.

HEPA filters, as defined by the United States Department of Energy (DOE) standard adopted by most American industries, remove at least 99.97% of airborne particles 0.3 micrometers (µm) in diameter. The filter's minimal resistance to airflow, or pressure drop, is usually specified around 300 pascals (0.044 psi) at its nominal volumetric flow rate.

The specification used in the European Union (European Standard EN 1822-1:2009), defines several classes of filters by their retention at the given most penetrating particle size (MPPS). The averaged efficiency of the filter is called "overall", and the efficiency at a specific point is called "local".

Examples of filter classes and amounts of particle retention are disclosed in the Table below:

| **HEPA class** | **Retention (averaged)** | **Retention (spot)** |
|---|---|---|
| E10 | > 85% | - |
| E11 | > 95% | - |
| E12 | > 99.5% | - |
| H13 | > 99.95% | > 99.75% |
| H14 | > 99.995% | > 99.975% |
| U15 | > 99.9995% | > 99.9975% |
| U16 | > 99.99995% | > 99.99975% |
| U17 | > 99.999995% | > 99.9999% |

In some embodiments, the composite filter material of the invention has a filter characteristic of (HEPA class) E10, E11, E12, H13, H14, U15, U16 or U17, preferably according to EN 1822-1:2009.

For example, the fine-pore material of the second layer preferably exhibits pores with an average pore size 1-1000 nm, preferably 0.05-500 µm. Preferred average pore sizes of the second layer are 1 nm, 10, 50, 100, 200, 300, 400, 500, 600, 700, 800, 900 or 1000 nm, or 0.05 µm, 0.1, 0.5, 1, 10, 50, 100, 200, 300, 400, or 500 µm, or any range using as end points the values disclosed herein. Considering that viral particles are approximately 100 nm in diameter, a large proportion of free particles will be filtered by the second layer with a fine-pore material.

The large-pore material of the third layer preferably exhibits pores with an average pore size of 1-1000 µm, preferably 100-1000 µm. Preferred average pore sizes in the third layer are 1, 5, 10, 50, 10, 150, 200, 250, 300, 350, 400, 450, 500, 550, 600, 650, 700, 750, 800, 850, 900, 950, or 1000 µm, or any range using as end points the values disclosed herein. Considering that virus particle carrying aerosols are approximately 5 µm in diameter, a large proportion of aerosols will be filtered by the third layer with a large-pore material.

In one embodiment, the first layer comprises a textile of 10-100 gsm, preferably 20-70 gsm, more preferably 25-50 gsm (expressed as area density of textile, mass per unit of area, also referred to as g/m²).

In one embodiment, the second layer comprises or consists of a material of 5-150 gsm, preferably 10-100 gsm, more preferably 10-80 gsm.

In one embodiment, the third layer comprises or consists of a material of 5-80 gsm, preferably 10-60 gsm, more preferably 20-40 gsm.

In one embodiment, the fourth adhesive layer comprises or consists of a material of 5-200 gsm, preferably 10-100 gsm, more preferably 20-80 gsm, more preferably about 50 gsm.

The above-mentioned weights or grammage of the materials represent preferred features, which alone or in combination, enable functional advantages. The combination of filter properties, weight and the presence of adhesive enables a light, stable mask insert that is light enough to be held in place to an auxiliary textile using reversable adhesive, whilst maintaining effective filter properties. This combination of properties could not have been derived from the art and represents a beneficial advancement in filter and mask technology.

In one embodiment, all layers are irreversibly, preferably thermally, bonded to form a composite multi-layer material. The composite material preferably forms a single sheet, comprising the multiple layers. The filter material may be referred to as the combination of the first, second and third layers, with or without the adhesive fourth layer.

Gas permeability is the ability of a barrier material (such as the material of the invention) to allow gases (e.g. O₂, N₂, CO₂, air etc.) to permeate through it in a specific time. Gas permeability can be assessed for example by using a Gas Permeability Tester, based on the differential pressure method. Methods are well established for determining gas permeability of textiles, such as woven or non-woven products, using a pressure drop method (Tokarska, Fibres & Textiles, 2005, Vol. 13, No. 4 (52)). Under set conditions, a stationary airflow occurs through the porous structure, i.e. a fabric. The value of the volume-air-flow w and the pressure p, which is equal to the pressure difference (pressure drop) occurring on both sides of the sample as a result of the airflow, are measured.

Furthermore, a droplet test may be used to characterize the pore size. Here, a constant volume flow due to a pressure difference on the top and bottom is used, for example according to ASTM D737. This test method covers the measurement of the air permeability of textile fabrics, and applies to most fabrics including woven fabrics, nonwoven fabrics, air bag fabrics, blankets, napped fabrics, knitted fabrics, layered fabrics, and pile fabrics. The fabrics may be untreated, heavily sized, coated, resin-treated, or otherwise treated.

Pore size determination can be carried out using techniques established in the art. For example, pore size distribution can be assessed in any porous structure such as nonwovens. The pores inside the nonwovens are complex in terms of the sizes, shapes and the capillary geometries. Models may be employed for predicting the pore size distribution of nonwoven structures. These techniques can incorporate the effects of fiber orientation characteristics in nonwoven structures. Comparisons can also be made between experimental and theoretical pore size distributions of spun-bonded and needle-punched nonwovens. The effect of various fiber and fabric parameters including fiber volume fraction, fiber orientation distribution characteristics and number of layers on pore size distribution of nonwoven structures can be determined using methods known in the art, for example as described in Rawal, Journal of the Textile Institute, 101(4):350-359.

Pore size and air permeability in spunlaced fabrics and spunbonded/meltblown/spunbonded (SMS) fabrics can be investigated using established techniques, such as described in Epps et al, Pore Size and Air Permeability Of Four Nonwoven Fabrics, International Nonwovens Journal. Minimum, maximum and mean flow pore sizes can be determined using liquid porosimetry. Liquid porosimetry is a useful technique in assessing pore sizes of nonwoven fabrics and can also aid in understanding the mechanism of air permeability.

Determination of pore size parameters and its distribution is also possible using image processing, as in Kothari et al, Determination of pore size parameters and its distribution of hydroentangled fabrics by image processing, The Journal of The Textile Institute, 99:4, 317-324. The filtration performance of a textile is controlled by its average pore size, often termed pore opening size distribution (PSD). Recent technological advancements in image analysis enable an accurate and direct way of determining the PSD of textiles, e.g. nonwoven textiles.

In one embodiment, the pressure drop value of the composite filter material is <500 Pa. In a corresponding embodiment, the volumetric flow rate, measured in liters per minute, is 160 I/min.

In one embodiment, the pressure drop value of the composite filter material is <240 Pa. In a corresponding embodiment, the volumetric flow rate, measured in liters per minute, is 95 I/min.

In one embodiment, the pressure drop value of the composite filter material is <70 Pa. In a corresponding embodiment, the volumetric flow rate, measured in liters per minute, is 30 I/min.

These pressure drop and volumetric flow rates represent advantageous properties. The combination of filtering properties with gas permeability represent a surprising and beneficial aspect of the invention.

In some embodiments, the layers and/or the composite filter material are elastic. In some embodiments, the filter material is an elastic nonwoven composite. The elasticity of the materials of the layers and/or the composite material itself is preferably under 30%, more preferably under 20%, more preferably about 10%.

The layers may be bonded using various approaches, available to a skilled person.

Chemical bonding may be applied, for example by passing a (preferably nonwoven) material over a roller so as to apply an adhesive to one surface of the material. At the same time, a (e.g. polyurethane) web is heated and longitudinally adhered to the material. Thereafter, a second (preferably nonwoven) material is adhered to the other surface of the polyurethane web to form a laminate consisting of an inner polyurethane core and outer fabric layers adhered to the core by the adhesive. Embodiments are preferred in which the filter pores are not blocked by the polyurethane, such that the filter material remains gas permeable.

Needle punching may be applied, for example where a first (preferably nonwoven) textile layer and a second textile layer (for example a layer of elastic material) are positioned to form superimposed layers. The layers are then needle punched to make a composite of the two layers. The spacing of the needles and plurality of needle punching locations are predetermined.

Thermal bonding may be applied, for example where a textile having synthetic thermoplastic fibers, such as polyethylene, polypropylene, polybutene, ethylene copolymers, propylene copolymers and butene copolymers, is created and treated under pressure or roller treatment under heat in order to form a layered and/or homogeneous composite material.

Welding methods may also be applied. Various methods are known to a skilled person, and a distinction is typically made according to the principle of how the energy for thermal bonding is introduced, for example using infrared, ultrasonic or high frequency welding.

Ultrasonic welding refers to one or more thermoplastic materials being connected to one another. Ultrasonic welding is established in the art, especially for thermoplastics. Compared with other welding methods, ultrasonic welding is particularly suitable where rapid process times, coupled with good process reliability are demanded or if no other fillers or solvents are to be used. Ultrasonic welding is also characterized by the quality, strength and accurate reproducibility of the welds. These advantages are imbued to the composite filter material of the present invention. In ultrasonic welding, high-frequency mechanical oscillations cause molecular and interface friction in the joining zone. This creates the heat required for welding and the material is plasticized. Following the effect of ultrasound, homogeneous stabilization of the joining zone is achieved as a result of brief cooling times, whilst maintaining the welding pressure. In addition, both the geometry of the sonotrodes and the anvil, as well as the shape in the welding zone itself, affect the welding result. Welding different thermoplastics according to their polymer compatibility, such as PP, PVC, PE, PET, ABS, composites, fabrics, fleece or or films, is possible, using very rapid process times, good process control and reliability by monitoring the welding parameters, consistent welding quality with visually perfect, stable and reproducible welds, an environmentally-friendly technology, and no solvents and fillers for welding, thereby making the process suited for the permeable filter of the invention.

High frequency welding or radio-frequency (RF) welding or dielectric welding may also be employed to bond the layers of the composite, which uses for example high frequency (13-100 MHz) electromagnetic energy to generate heat in polar materials, resulting in melting and weld formation after cooling. A high intensity radio signal is used to impart increased molecular motion in two similar or dissimilar polymers. This causes the materials to rise in temperature, increased polymer chain mobility, and melting. Ultimately, the polymer chains of the two materials penetrate their interface and become entangled, forming a weld.

Inter-fiber bonding between layers may be employed to form a coherent web structure which is able to withstand separation force or elastic movement. Inter-fiber bonding may also be evident prior to inter-layer bonding, as it is produced by entanglement between individual melt-blown fibers within a single layer. The fiber entangling is inherent in a single layer produced by a melt-blown process but may be generated or increased between different layers using processes such as, for example, thermal bonding or needle punching.

In one embodiment, the composite filter material comprises additionally a fifth layer, positioned between the first and second layers or second and third layers, said fifth layer comprising or consisting of a structural element configured for stably and reversibly adjusting the shape of the material to fit a three-dimensional form. In some embodiments, the fifth layer is formed from the same material as the first, second and/or third layers, or an alternative synthetic material that provides a malleable but stable 3D form, as may be shaped according to the face of the wearer.

In some embodiments, the fifth layer is positioned between the first and second layers and/or positioned between the second and third layers and/or positioned between the fourth layer and the layer adjacent to said fourth layer.

In one embodiment, the fifth layer comprises or consists of a material of 5-50 gsm, preferably 10-40 gsm, more preferably 10-20 gsm. The fifth layer is preferably manufactured comprising or consisting of PES/PP or PA/PP, and is produced by Spunbond e.g. melting the outer shell of a bi-component fiber, whereby the core is not melted, to give greater 3D stability, thereby providing a layer suitable for positioning or forming the material to the face of the wearer.

In one embodiment, the composite filter material according comprises additionally a sixth layer, positioned distally and adjacent to said fourth layer, said sixth layer comprising or consisting of a removable foil or other protective sheet to prevent unwanted adhesion of the fourth layer to a near-by object, for example packaging material. Suitable foils to cover the adhesive prior to use are known to a skilled person.

In one embodiment, the first, second and/or third layer is a woven, knitted or non-woven material comprising one or more synthetic materials, preferably selected from the group consisting of polypropylene (PP), polyamide (PA), polyester (PE), polytetrafluoroethylene (PTFE), spandex, nylon, more preferably PP, PA and PE.

In one embodiment, the first, second and/or third layer is a woven, knitted or non-woven material comprising one or more biodegradable materials, preferably selected from the group consisting of polylactide (PLA), polyhydroxybutyrate (PHB), wool, cotton, silk, linen, hemp, jute, rayon and viscose, more preferably PLA, PHB and cotton.

As used herein, a woven material or fabric is any textile formed by weaving or an analogous process. Woven fabrics may be created on a loom and made of threads or fibers woven on a warp and a weft. Preferably, a woven fabric is any fabric or textile made by interlacing two or more threads at essentially right angles to one another.

As used herein, knitted fabric is a textile that results from knitting. Its properties are distinct from woven fabric in that it is typically more elastic. In weaving, threads are typically straight, running parallel either lengthwise (warp threads) or crosswise (weft threads). By contrast, the yarn in knitted fabrics follows a meandering path forming loops symmetrically above and below the mean path of the yarn. These meandering loops can be easily stretched in different directions giving knit fabrics much more elasticity than woven fabrics.

As used herein, non-woven fabrics or textiles are sheet or web structures bonded together by entangling fiber or filaments (and by perforating films) mechanically, thermally or chemically. They are preferably flat or tufted porous sheets that are made directly from separate fibers, molten plastic or plastic film. They are typically not made by weaving or knitting and do not require converting the fibers to yarn.

Nonwoven fabrics are preferably engineered fabrics comprising synthetic materials that may be single use, have a limited life and/or be very durable. Alternatively. Non-wovens may also include biodegradable or naturally occurring fibers such as Cotton, linen, etc., as disclosed herein. Typically, a certain percentage of recycled fabrics and oil-based materials are used in nonwoven fabrics. Some nonwoven fabrics can be recycled after use, given the proper treatment and facilities, such that environmental friendliness is considered a benefit of synthetic non-wovens.

Nonwoven fabrics may, in some embodiments, endow the material of the invention with one or more specific functions, such as absorbency, liquid repellence, resilience, stretch, softness, strength, flame retardancy, washability, cushioning, thermal insulation, filtration, use as a bacterial or viral barrier and sterility.

In some embodiments, one or more of the layers are non-woven (preferably produced by Spunbond or Needlepunch methods), knitted (circular, flat, warp), or woven. In some embodiments, one or more of the layers are non-woven (preferably produced by Meltblown, Electrospinning, Needlepunch (island-in-a-sea fibers methods). In some embodiments, one or more of the layers are non-woven produced by Spunbond (preferably using a process comprising melting an outer shell of a bi-component fiber, wherein the core is not melted, which provides additional stability).

In one embodiment, the second and/or third layers are fibrous electrets based on melt-blown fibers. Melt-blown fibers are fibers prepared by extruding molten fiber-forming material through a plurality of orifices into a high-velocity gaseous stream where the extruded material is attenuated to form a stream of fibers.

According to embodiments of the invention, melt-blown fibers are bombarded as they issue from the orifices with electrically charged particles such as electrons or ions. The fibers are collected at a point remote from the orifices where they have cooled to a solid fibrous shape-retaining form and where they are found to carry a persistent electric charge. The collected web or mat can be used directly and for trimming or cutting to size.

Preferred embodiments of the invention employ for example melt-spun, preferably polypropylene (PP), fibers treated in an electric field of a corona discharge in order to enhance their electret properties. The electret state induced in PP fibers by the corona discharge treatment holds for a long time (several months) and enables not only improved immobilization between the adhesive and third layer, but also enhances binding of viral or other air-borne particles to the non-woven fibers.

Particularly preferred are non-woven fine-fiber filter textiles as the second and third layers, that are treated to enhance electret properties. Typically, any suitable charging technique (corona charging, electrostatic fiber spinning) may be employed to charge fibers or fabrics of different polymer types. Corona charging is suitable for charging monopolymer fiber or fiber blend, or fabrics. Electrostatic fiber spinning combines the charging of polymer and the spinning of the fibers as a one-step process. An electrostatic spinning process produces nanofibers exhibiting extremely high efficiency by mechanical filtration mechanisms.

Particulates are thus not all collected by any given form of sieving process. Rather, in some embodiments of the invention, materials are selected that enable particle collection due to the hydrodynamics of flow past a single fiber, where particles are collected by (1) inertia or interception; (2) the stochastic motion of small particulates (typically <0.5 µm) caused by collisions with gas molecules; and/or (3) electrostatic mechanisms due to the particles' charge.

Face mask filtration mechanisms therefore have to optimize between two competing requirements. The mask filters must have a pore size small enough to trap particles, but a pore size too small also prevents the individual from breathing, so mask filters cannot go below a certain average pore diameter. To meet this optimization requirement, the composite filter materials of the present invention essentially operate on one or more, preferably all, of three principles, including, but not limited to, (1) inertial impaction, whereby aerosol or dust particles typically 1 micron or larger in size with enough inertia to prevent them from flowing around the fibers in the filtration layers essentially are driven into the mask material and become filtered, i.e. by the third layer. (2) diffusion, whereby particles smaller than 1 micron, usually 0.1 microns and smaller, that are not subject to inertia, undergo diffusion and get stuck to fibrous layers of the filter, and (3) electrostatic attraction, which employs electrocharged (electret) polymer or resin fibers that attract both large and small oppositely charged particles and trap them. The electrospun polymer materials are often manufactured using a method called electrospinning, in order to generate the electrostatic properties of the fibers. Corona or plasma treatment may be conducted additionally.

As used herein, skin-compatible textiles, also referred to as non-irritant, are those that typically cause no irritation to a human wearer. Various factors may be considered, for example mechanical properties like roughness of fabric surface are responsible for non-specific skin reactions like wool intolerance or keratosis follicularis. Thermoregulation, which is mediated by local blood flow and evaporation of sweat, is an important subject for textile-skin interactions. Preferably the skin compatible textile is not heating (thereby cooling), soft, fast drying, capable of spreading liquid and has a high surface area. Antimicrobial textiles may interfere with non-specific immune defense mechanisms like antimicrobial peptides of skin or the resident microflora, however many antimicrobial textiles are acceptable as skin compatible, as no irritation discomfort or inflammation is induced. Preferred are also medical textiles, which are considered biocompatible, non-toxic, non-allergenic and sterilizable. Non-limiting examples of skin compatible materials are cotton, viscose, polyester, polyamide, polypropylene, polyethylene, elastane, or mixtures thereof.

In one embodiment, the second layer comprises a polarized, preferably electret, nonwoven fabric of polypropylene (PP), polyamide (PA), polyester (PE), polytetrafluoroethylene (PTFE) fibers, preferably produced via meltblown, electrospinning or needlepunch procedures.

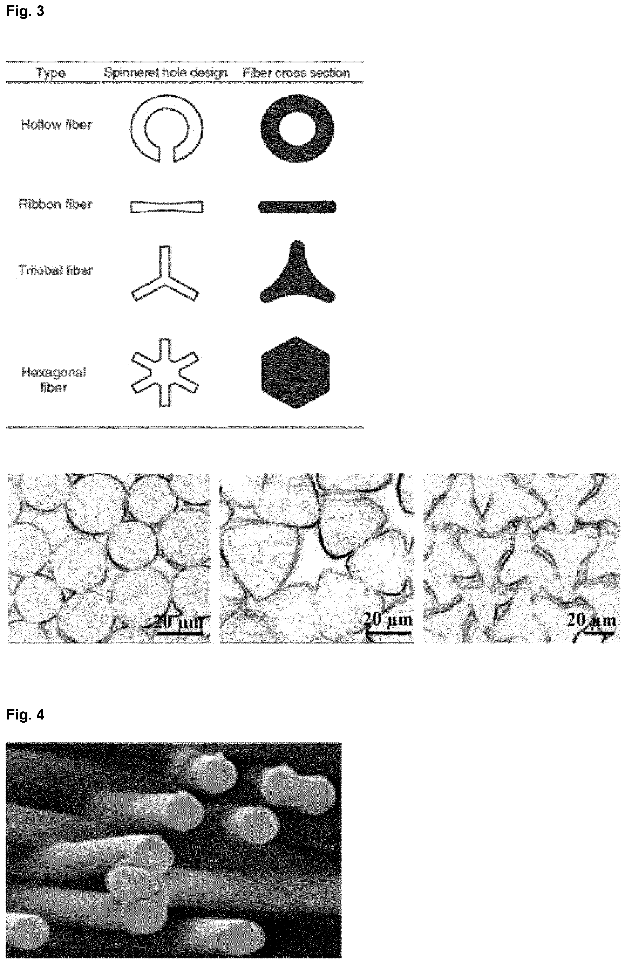

In one embodiment, the first layer comprises a woven, knitted or non-woven material comprising one or more structured fibers or yarns selected from hollow, ribbon and/or multi-lobal, such as tri- or hexagonal lobed, fibers. Examples are provided in Figure 3.

In one embodiment, one or more of the first, second and/or third layers are treated with an antimicrobial (anti-bacterial, anti-viral, anti-fungal) agent, selected for example from a quaternary ammonium organosilane compound, silver chloride or other silver salts, poly-glucosamine, propiconazole, bio-coated silver particles and/or poly-hexa-methylene-biguanide, and processed such that said agent is affixed to a layer in a wash-durable, non-leaching manner.

Various methods for producing antimicrobial fabrics are known to a skilled person. For example, WO2015028852 discloses textiles and methods for their production comprising treating a fabric or textile with a combination of one, several or all of a quaternary ammonium organosilane compound, and/or silver chloride and/or other types of silver salts, and/or Poly-glucosamine, and/or propiconazole, and/or bio-coated silver particles and/or poly-hexamethylene-biguanide, such that the entire cross section of the substrate becomes antimicrobial, anti-fungal and anti-viral in nature and meets prescribed standards to qualify as disinfecting, and is processed that the above chemistry is affixed onto the textile in a washdurable, non-leaching manner. As used herein, textiles with disinfecting qualities preferably refer to materials made to the specific property wherein the textile can provide a reduction in bacterial (gram positive or gram negative) contamination.

In some embodiments, bacterial contamination is reduced by 4 logs or greater in less than 180 minutes, for example bacterial contamination is reduced by 4 logs or greater in about 120 minutes. Depending on the antimicrobial material applied, improved antibacterial effects may be achieved. In one embodiment, bacterial contamination is reduced by 4 logs or greater in less than 60 minutes, preferably less than 30 minutes, more preferably in less than 10 or 5 minutes. In addition, the antimicrobial action may hinder the growth of fungi and/or deactivate the infectiousness of viral particles.

It is an additional property obtained in the present invention to make the abovementioned disinfecting textiles wash durable (long lasting) and functionally effective even after repeated wash cycles, mechanical rubbing, contact with liquids, or contact with vapors, with a mix of chemicals that allow for high levels of disinfecting activity, resulting in a disinfecting textile which has the capability to be additionally enhanced for multi-functional capabilities.

Alternative methods are known in the art and may be employed by a skilled person. For example, the products obtained from Sanitized, such as T20-19 or T99-19, may be employed. T99-19 has a reliable and durable bacteriostatic effect against a large number of gram-positive and gram-negative bacteria and some yeasts such as representatives of the Candida group. It is used in textiles for permanent direct contact with the human skin. The active ingredient is free from AOX. Substrates protected with Sanitized T 99-19 are noted for their proven, outstanding skin tolerance (OECD 406 and RIPT test). T20-19 is based on a quaternary ammonium salt, which not only prevents bacteria growth and reproduction but also acts as a chemical anchor through an organic silicium function, which forms a stable and highly wash-resistant bond with fibers. Benefits including reduced cost, decreased flammability, improved work with textile effects such as thermomigration and colorfastness, and reduced product remaining in the wastewater.

The present invention therefore shows in some embodiments an effective anti-microbial activity against both gram-positive and gram-negative bacteria, pathogenic yeasts and fungi, and viral particles, thereby indicating a broad-spectrum anti-microbial effect.

A further aspect of the invention relates to a kit comprising a face mask for covering the mouth and nose of a human subject and the composite filter material according to any of the preceding claims for reversable attachment to said face mask, preferably wherein said face mask and said composite filter material are configured in their dimensions for combined use.

The kit may optionally comprise multiple composite filter materials of the present invention. Typically, a kit represents a product in which the masks and filters are present in combination, either packaged together or in proximity to each other. The combined offering of a mask and the filters as described herein may be considered a kit, if available separately but for combined purchase.

A further aspect of the invention relates to a method for improving and/or supplementing the filter properties of a textile face mask for covering the mouth and nose of a human subject, comprising reversibly attaching a composite filter material according to any of the preceding claims to said face mask, preferably to the inner surface or said face mask.

A further aspect of the invention relates to a method for manufacturing a composite filter material as described herein, comprising production of the first, second and third, and optionally fifth layer, as described herein, followed by joining (preferably lamination and/or welding and/or via the use of adhesive) of the 3 (or 4) layers, and attaching the adhesive layer to the third layer, preferably to the third layer when already present as an adhesive laminate.

The features regarding the filter material, the kit and method are applicable to each of the aspects, and may be applied to characterize any given aspect, as may be necessary.

### FIGURES

The invention is demonstrated by way of the figures disclosed herein. The figures provide technical support for a detailed description of potentially preferred, non-limiting embodiments of the invention.

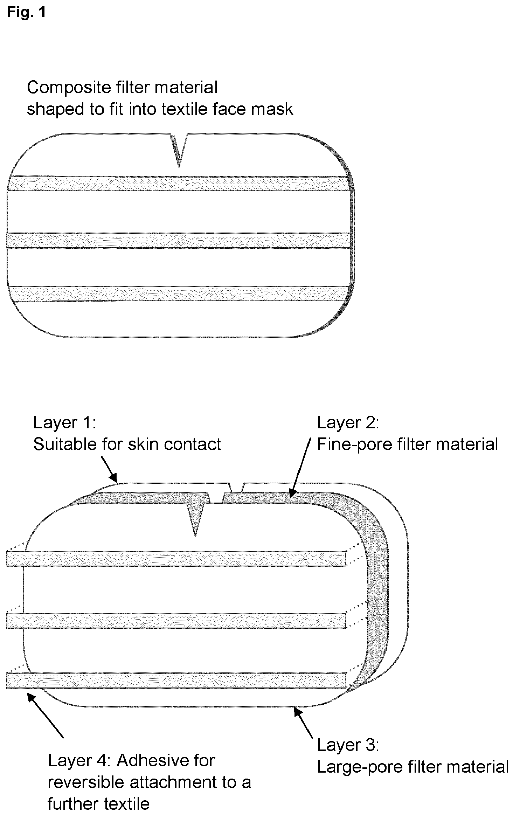

**Fig. 1****:** Schematic illustration of reversibly attachable composite filter material. Shown in the upper panel is the filter material of the invention in which the four layers are bonded to form essentially a unified composite multi-layer material. The adhesive fourth layer is positioned in stripes across the third layer. In the lower panel, the layers are represented as separate from one another to illustrate a preferred layer arrangement.

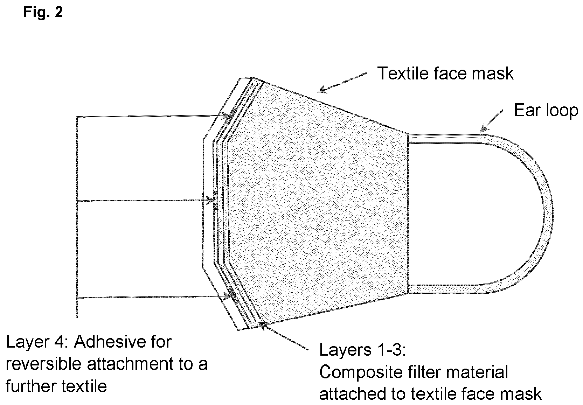

**Fig. 2****:** Schematic cross section view of a textile facemask with reversibly attached composite filter material. Shown is a cross-section schematic to demonstrate the approximate positioning of the material inside a textile face mask. The (auxiliary) face mask exhibits in this embodiment essentially three surfaces, forming a bent structure to approximately imitate the contours of a wearer's face. The inventive filter material is formed essentially to match the three surfaces. The three strips of adhesive fourth layer are positioned, one on each of these three inner surfaces.
**Fig. 3****:** Various synthetic fiber cross-section shapes to be employed in the present invention. Demonstrated are hollow, ribbon, trilobal and hexagonal-shaped fibers. Also shown are images of the cross sections of fibers employed in the composite material of the invention. Images are presented of circular, roughly triangular and triolobal cross-sections.
**Fig. 4****:** Scanning Electron Microscopy (SEM) Micrograph images of electrospun polymer fibers at 20-micron resolution.

### EXAMPLE

The invention is demonstrated by way of the following example disclosed herein. The example provides technical support for a detailed description of potentially preferred, non-limiting embodiments of the invention.

An exemplary composite filter material configured for use with a face mask was produced using the following method.

Step 1: Production of the first layer made from soft, skin-compatible Polypropylene spunbond fleece. For the spunbond fleece, thin filaments of polypropylene are drawn from a thermoplastic melt and thermally bonded into a nonwoven.

Step 2: Production of the second layer, made from electrospun Polypropylene nano fleece. The filaments of the nano fleece are spun out in an electric field. The electrospun filaments and the nonwoven structure formed from them are very fragile and can tear quickly under mechanical stress or lose their extremely fine macroscopic structure. Therefore, they are spun onto the "carrier" material, which in this example is the first spunbond nonwoven.

Step 3: Production of the third layer made from Polypropylene spunbond fleece that has the function of filtering coarse particles.

Step 4 (optional): Production of a fifth layer, which has the function to ensure spherical stability of the laminated end product. It is produced from bi-component filaments, which combines a material with a high melting point at its core with material that has a lower melting point. The filaments are laid randomly on top of each other and heated. The material with the lower melting point melts and joins continuous filaments at their crossing points. The result is a net-shaped fleece structure.

All materials above are produced in the same dimensions/width to improve handling and reduce waste in the next step:
Step 5: Lamination of the 3, respectively 4 textile layers. During the lamination all layers above are combined into one layer over the entire width of the fabric. The laminar bonding can be carried out as spot welding in a continuous ultrasonic welding process or by convection welding.

Alternatively, the layers can be joined close to the final contour during product manufacture. This step is often carried out in welding processes, ultrasonic welding, high-frequency welding, infrared welding or convection welding. The layers can also be joined together with an adhesive.

The laminate now consists of 3 or 4 textile layers and can be equipped with the adhesive (fourth) layer.

Step 6: The adhesive layer is produced as a flat film. The film is fabricated as a wide continuous sheet and covered with a non-sticky liner material. The film is then rolled up and cut into rolls with a width of 2-6 mm.

Step 7: Attaching the adhesive layer to the textile laminate. For this, the textile layers are fed into a process where several rolls of the adhesive film are continuously applied to the textile laminate in parallel and at a distance to each other.

Step 8: Attaching a cover liner: The non-sticky liner material from the pre-production of the rolls (each 2-6 mm wide) gets removed and replaced by a liner that covers the entire surface of the laminate. This cover liner improves the usability for consumers.

Step 9: Punching out parts that fit into textile face masks. For this, the result of step 8 is put into a process where mask-shaped parts are punched out of the wide roll surface. This process can be carried out continuously in rotation.

Step 10: The punched parts are stacked and packed for distribution and sale.

## Claims

1. A composite filter material permeable to air and configured for use with a face mask for a human subject, wherein said filter material:
- comprises a skin-compatible inner surface
- is configured for filtering and/or capturing aerosols,
- and wherein said filter material comprises an adhesive immobilized to an outer surface, wherein the adhesive is configured for reversable attachment to a further textile.

2. The composite filter material according to claim 1, comprising:
a. a first layer comprising or consisting of a skin-compatible textile,
b. a second layer, positioned distally said first layer, said second layer comprising or consisting of a fine-pore material configured for filtering and/or capturing aerosols, preferably for filtering and/or capturing air-borne bacterial and/or viral particles,
c. a third layer, positioned distally to said first layer, said third layer comprising or consisting of a large-pore material configured for filtering and/or capturing air-borne dust particles, and
d. a fourth layer, positioned distally to said second and third layers, said fourth layer comprising or consisting of an adhesive immobilized to the adjacent layer, wherein the adhesive is configured for reversable attachment to a further textile.

3. The composite filter material according to any of the preceding claims, wherein the second layer is positioned distally and adjacent to said first layer, and the third layer is positioned distally and adjacent to said second layer, and the fourth layer is positioned distally and adjacent to said third layer.

4. The composite filter material according to any of the preceding claims, wherein
- the fine-pored material exhibits pores with an average pore size of 1-1000 nm, preferably 0.05-500 µm; and/or the large-pore material exhibits pores with an average pore size of 1-1000 µm, preferably 100-1000 µm;
and/or
- the composite filter material is configured for filtering and/or capturing at least 85%, preferably at least 95%, of air-borne particles of 0.3 µm in diameter.

5. The composite filter material according to any of the preceding claims, wherein the further textile is the inner surface of a face mask configured for covering the mouth and nose of a human subject, and wherein the immobilization of the adhesive to the third layer is configured for reversable attachment of the adhesive to said further textile essentially without dissociation of the adhesive from the third layer upon repeated attachment and detachment to said further textile.

6. The composite filter material according to any of the preceding claims, wherein the immobilization of the adhesive fourth layer to the adjacent third layer is enhanced by corona, plasma and/or ion treatment of the third layer prior to application of the adhesive fourth layer.

7. The composite filter material according to any of the preceding claims, wherein all layers are irreversibly, preferably thermally, bonded to form a composite multi-layer material.

8. The composite filter material according to any of the preceding claims, comprising additionally:
e. a fifth layer, positioned between the first and second layers and/or positioned between the second and third layers and/or positioned between the fourth layer and the layer adjacent to said fourth layer, said fifth layer comprising or consisting of a structural element configured for stably and reversibly adjusting the shape of the material to fit a three-dimensional form,
and/or comprising additionally:
f. A sixth layer, positioned distally and adjacent to said fourth layer, said sixth layer comprising or consisting of a removable foil or other protective sheet to prevent unwanted adhesion of the fourth layer to a near-by object, for example packaging material.

9. The composite filter material according to any of the preceding claims, wherein the first, second and/or third layer is a woven, knitted or non-woven material comprising:
- one or more synthetic materials, preferably selected from the group consisting of polypropylene (PP), polyamide (PA), polyester (PE), polytetrafluoroethylene (PTFE), spandex, nylon, more preferably PP, PA and PE,
and/or
- one or more biodegradable materials, preferably selected from the group consisting of polylactide (PLA), polyhydroxybutyrate (PHB), wool, cotton, silk, linen, hemp, jute, rayon and viscose, more preferably PLA, PHB and cotton.

10. The composite filter material according to any of the preceding claims, wherein the first layer comprises a woven, knitted or non-woven material comprising one or more structured fibers or yarns selected from hollow, ribbon and/or multi-lobal, such as tri- or hexagonal lobed, fibers.

11. The composite filter material according to any of the preceding claims, wherein the second layer comprises a polarized, preferably electret, nonwoven fabric of polypropylene (PP), polyamide (PA), polyester (PE) and/or polytetrafluoroethylene (PTFE) fibers, preferably produced via meltblown, electrospinning or needlepunch procedures.

12. The composite filter material according to any of the preceding claims, wherein the fourth layer comprises a water-soluble and biocompatible adhesive, preferably an acrylate-copolymer or synthetic rubber adhesive.

13. The composite filter material according to any of the preceding claims, wherein one or more of the first, second and/or third layers are treated with an antimicrobial (anti-bacterial, anti-viral, anti-fungal) agent, selected for example from a quaternary ammonium organosilane compound, silver chloride or other silver salts, poly-glucosamine, propiconazole, bio-coated silver particles and/or poly-hexa-methylene-biguanide, and processed such that said agent is affixed to a layer in a wash-durable, non-leaching manner.

14. A kit comprising a face mask for covering the mouth and nose of a human subject and the composite filter material according to any of the preceding claims for reversable attachment to said face mask, preferably wherein said face mask and said composite filter material are configured in their dimensions for combined use.

15. A method for improving and/or supplementing the filter properties of a textile face mask for covering the mouth and nose of a human subject, comprising reversibly attaching a composite filter material according to any of the preceding claims to said face mask, preferably to the inner surface or said face mask.
